(19) Europäisches Patentamt
European Patent Office
Office européen des brevets

(11) **EP 3 820 220 B1**

(12) **EUROPEAN PATENT SPECIFICATION**

(45) Date of publication and mention
of the grant of the patent:
**27.09.2023 Bulletin 2023/39**

(21) Application number: **19847061.9**

(22) Date of filing: **06.08.2019**

(51) International Patent Classification (IPC):
*H04L 1/00* (2006.01)   *H04L 1/1607* (2023.01)
*H04L 5/00* (2006.01)   *H04W 72/21* (2023.01)

(52) Cooperative Patent Classification (CPC):
**H04L 1/0073; H04L 1/1671; H04L 5/0044;
H04L 5/0092; H04W 72/21;** H04L 5/0007;
H04L 5/0055; H04L 5/0057

(86) International application number:
**PCT/CN2019/099395**

(87) International publication number:
**WO 2020/029947 (13.02.2020 Gazette 2020/07)**

(54) **TRANSMISSION METHOD AND DEVICE FOR UPLINK CONTROL INFORMATION AND COMPUTER STORAGE MEDIUM**

ÜBERTRAGUNGSVERFAHREN UND -VORRICHTUNG FÜR UPLINK-STEUERUNGSINFORMATIONEN UND COMPUTERSPEICHERMEDIUM

PROCÉDÉ ET DISPOSITIF DE TRANSMISSION D'INFORMATIONS DE COMMANDE DE LIAISON MONTANTE ET SUPPORT D'INFORMATIONS INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2018 CN 201810886212**

(43) Date of publication of application:
**12.05.2021 Bulletin 2021/19**

(73) Proprietors:
• **China Mobile Communication Co., Ltd Research Institute**
**Beijing 100053 (CN)**
• **China Mobile Communications Group Co., Ltd.**
**Beijing 100032 (CN)**

(72) Inventors:
• **ZHANG, Yi**
**Beijing 100053 (CN)**
• **XIA, Liang**
**Beijing 100053 (CN)**

(74) Representative: **J A Kemp LLP**
**80 Turnmill Street**
**London EC1M 5QU (GB)**

(56) References cited:
**WO-A1-2018/106063   CN-A- 107 409 014**

• **HUAWEI ET AL: "Discussion on UCI feedback for URLLC", 3GPP DRAFT; R1-1800054, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Vancouver, Canada; 20180122 - 20180126 13 January 2018 (2018-01-13), XP051384557, Retrieved from the Internet: URL:http://www.3gpp.org/ftp/tsg%5Fran/WG1%5FRL1/TSGR1%5FAH/NR%5FAH%5F1801/Docs/ [retrieved on 2018-01-13]**
• **NOKIA ET AL: "On UCI multiplexing", 3GPP DRAFT; R1-1720013_UCI_MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 17 November 2017 (2017-11-17), XP051369220, Retrieved from the Internet: URL:http://www.3gpp.org/ftp/tsg%5Fran/WG1%5FRL1/TSGR1%5F91/Docs/ [retrieved on 2017-11-17]**

- CATT: "Considerations on UCI multiplexing for NR URLLC", 3GPP DRAFT; R1-1806297-CONSIDERATIONS ON UCI MULTIPLEXING FOR NR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Busan, Korea; 20180521 - 20180525 12 May 2018 (2018-05-12), XP051462463, Retrieved from the Internet: URL:http://www.3gpp.org/ftp/tsg%5Fran/WG1%5FRL1/TSGR1%5F93/Docs [retrieved on 2018-05-12]
- FUJITSU: "UCI Pggyback on PUSCH with URLLC Data", 3GPP TSG RAN WG1 Meeting#93, R1-1806121, XP051461718,

**Description**

TECHNICAL FIELD

The disclosure relates to wireless communication technologies, in particular to a method for transmission of uplink control information, a terminal and a network device.

BACKGROUND

Uplink Control Information (UCI) piggyback is a method for transmitting UCI on Physical Uplink Shared Channel (PUSCH). When the PUCCH resource for transmitting UCI and the PUSCH resource for transmitting data overlap, and the processing time requirement is met, the UCI may be transmitted on the PUSCH.

At present, as to the PUSCH for transmitting the Ultra Reliable Low Latency Communication (URLLC) service and the PUSCH for transmitting the Enhance Mobile Broadband (eMBB) service, UCI piggyback rules are the same. However, the reliability requirements of the URLLC service and the eMBB service are different. In general, the URLLC service has a higher reliability requirement. Therefore, the existing methods for transmission of UCI cannot meet the requirements of different services.

Background may be found in HUAWEI ET AL: "Discussion on UCI feedback for URLLC", R1-1800054, XP051384557, 13 January 2018; in NOKIA ET AL: "On UCI multiplexing", R1-1720013, XP051369220, 17 November 2017; and in GATT: "Considerations on UCI multiplexing for NR URLLC", R1-1806297, XP051462463, 12 May 2018.

SUMMARY

In order to solve the existing technical problem, the embodiments of the disclosure provide a method for transmission of uplink control information, a terminal and a network device.

The invention is set out in the appended set of claims.

According to the technical solutions of the disclosure, at least one of: different types of PUSCHs, or, different types of uplink control information correspond to different PUSCH configuration parameters, by this way, the terminal transmits, based on the PUSCH configuration parameter corresponding to at least one of the type of PUSCH or the type of uplink control information, the uplink control information, which meets the reliability requirements of transmission of different services.

BRIEF DESCRIPTION OF THE DRAWINGS

FIG. 1 is a flowchart of a method for transmission of uplink control information according to an embodiment of the disclosure;

FIG. 2 is a flowchart of another method for transmission of uplink control information according to an embodiment of the disclosure;

FIG. 3 is a diagram of a composition structure of a terminal according to an embodiment of the disclosure;

FIG. 4 is a diagram of another composition structure of a terminal according to the disclosure; and

FIG. 5 is a diagram of a composition structure of a network device according to an embodiment of the disclosure.

DETAILED DESCRIPTION

The disclosure will be further described in detail below in conjunction with the drawings and specific embodiments.

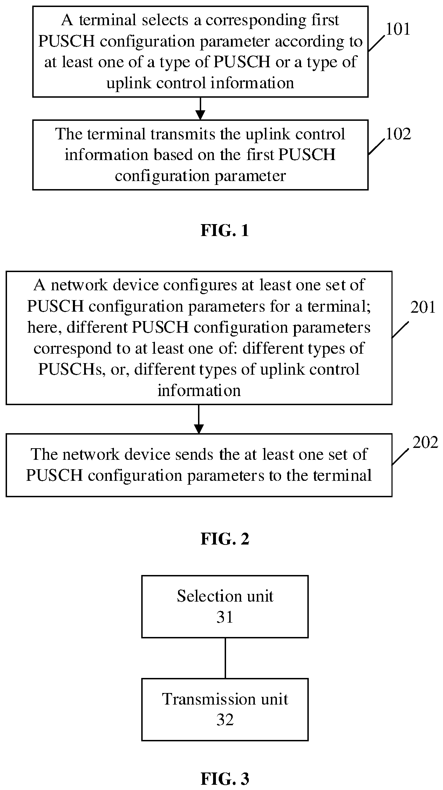

The embodiment of the disclosure provides a method for transmission of uplink control information. FIG. 1 is a flowchart of a method for transmission of uplink control information according to an embodiment of the disclosure. As shown in FIG. 1, the method includes the following operations.

In S101: a terminal selects a corresponding first PUSCH configuration parameter according to at least one of a type of PUSCH or a type of uplink control information; different PUSCH configuration parameters correspond to at least one of: different types of PUSCHs, or, different types of uplink control information.

In S102: the terminal transmits the uplink control information based on the first PUSCH configuration parameter.

The embodiment is applicable to UCI piggyback, that is, when the PUCCH resource for transmitting UCI and the PUSCH resource for transmitting data overlap, and the processing time requirement is met, the UCI is transmitted on the PUSCH. UCI piggyback is embodied in a field 'uci-OnPUSCH' in the PUSCH configuration (PUSCH-Config). The uci-OnPUSCH field is configured to select a dynamic beta-offset or a semi-static beta-offset, and includes a scaling parameter configured to limit the maximum number of Resource Elements (REs) assigned to UCI on PUSCH. Herein, the beta-offset represents a code rate adjustment value of UCI relative to data carried by PUSCH. The codes of the uci-OnPUSCH field is as follows.

```
UCI-OnPUSCH ::=        SEQUENCE {
betaOffsets               CHOICE {
dynamic                   SEQUENCE (SIZE (4)) OF BetaOffsets,
semiStatic                BetaOffsets
}                                    OPTIONAL, -- Need M
scaling                   ENUMERATED { f0p5, f0p65, f0p8, f1}
}
```

As an implementation, the method further includes: the terminal receives at least one set of PUSCH configuration parameters configured by a network device; or at least one set of PUSCH configuration parameters is configured for the terminal in a predefined manner.

In the embodiment, the terminal has at least one set of PUSCH configuration parameters. The PUSCH configuration parameters may be configured by the network device, or may be configured in the predefined manner. Herein, different PUSCH configuration parameters correspond to at least one of: different types of PUSCHs, or, different types of uplink control information.

As an implementation, the terminal receives the at least one set of PUSCH configuration parameters configured by the network device, which includes: the terminal receives the at least one set of PUSCH configuration parameters configured by the network device through high-layer signaling.

In the embodiment, the type of PUSCH includes one of the followings that: data carried by PUSCH belongs to different service types or different service type groups; data carried by PUSCH belongs to different service priorities or different service priority groups; data carried by PUSCH belongs to different logical channels or different logical channel groups; downlink control information for scheduling PUSCH belongs to different physical layer Downlink Control Information (DCI) formats or different DCI format groups; Radio Network Temporary Identifiers (RNTIs) for scrambling physical layer downlink control information for scheduling PUSCH are different RNTIs or belong to different RNTI groups; and information carried by downlink control information for scheduling PUSCH is different.

In the embodiment, the type of uplink control information corresponds to at least one type of Physical Downlink Shared Channel (PDSCH). Herein, the type of PDSCH includes one of the followings that: data carried by PDSCH belongs to different service types or different service type groups; data carried by PDSCH belongs to different service priorities or different service priority groups; data carried by PDSCH belongs to different logical channels or different logical channel groups; Downlink Control Information (DCI) for scheduling PDSCH belongs to different DCI formats or different DCI format groups; RNTIs for scrambling physical layer downlink control information for scheduling PDSCH are different RNTIs or belong to different RNTI groups; and information carried by downlink control information for scheduling PDSCH is different.

In the embodiment, categories of the uplink control information include: Hybrid Automatic Repeat Request Acknowledgement/Negative Acknowledgement (HARQ-ACK/NACK), a first part of Channel State Information (CSI part 1), and a second part of Channel State Information (CSI part 2).

In the embodiment, the at least one set of PUSCH configuration parameters includes at least one of:

a first set of configuration parameters including state parameters corresponding to at least one of: different types of PUSCHs, or, different types of uplink control information, here, one of the state parameters indicates whether to allow a first type of uplink control information to be transmitted on a first type of PUSCH;
a second set of configuration parameters including scaling parameters corresponding to at least one of: different types of PUSCHs, or, different types of uplink control information, here, one of the scaling parameters is configured to limit the maximum number of Resource Elements (REs) assigned to uplink control information on a PUSCH;
a third set of configuration parameters including beta-offset parameters corresponding to at least one of: different types of PUSCHs, or, different types of uplink control information; here, one of the beta-offset parameters indicates beta-offsets of a first type of uplink control information relative to data carried by a first type of PUSCH; or,
a fourth set of configuration parameters including at least one of: categories of uplink control information capable of being transmitted on different types of PUSCHs, or payload sizes of uplink control information capable of being transmitted on different types of PUSCHs.

Herein, the first type of PUSCH is any one of the types of PUSCHs; and the first type of uplink control information is any one of the types of uplink control information.

As a first implementation, the at least one set of PUSCH configuration parameters may include a first set of configuration parameters, and the first set of configuration parameters may be uci-OnPUSCH, for example, the description of the first set of configuration parameters of uci-OnPUSCH may refer to the aforementioned descriptions. Here, the first set of configuration parameters includes state parameters corresponding to at least one of: different types of PUSCHs, or, different types of uplink control information, and one of the state parameters indicates whether to allow a first type of uplink control information to be transmitted on a first type of PUSCH. For example, the state parameters include state 1 and state 2, state 1 indicates that a corresponding type of UCI is allowed to be transmitted on a corresponding type of PUSCH, and state 2 indicates that a corresponding type of UCI is not allowed to be transmitted on a corresponding type of PUSCH.

Herein, when the first PUSCH configuration parameter is a configuration parameter in the first set of configuration parameters, the terminal transmits the uplink control information based on the first PUSCH configuration parameter, which includes: the terminal transmits, based on the state parameter in the first PUSCH configuration parameter, a corresponding type of uplink control information on a corresponding type of PUSCH, or does not transmit a corresponding type of uplink control information on a corresponding type of PUSCH.

As a second implementation, the at least one set of PUSCH configuration parameters include a second set of configuration parameters, and the second set of configuration parameters are the scaling parameters in the aforementioned uci-OnPUSCH parameter description, here, one of the scaling parameters represents the maximum number of REs assigned to a first type of uplink control information on a first type of PUSCH.

As a third implementation, the at least one set of PUSCH configuration parameters may include a third set of configuration parameters, and the third set of configuration parameters may be the beta-offset parameters in the aforementioned uci-OnPUSCH parameter description, here, one of the beta-offset parameters is configured to indicate beta-offsets of a certain type of UCI relative to data carried by a certain type of PUSCH. If DCI for scheduling PUSCH does not include the beta-offset indicator field, beta-offset parameters, which may be configured by a higher layer, are applied for code rate adjustment of UCI. Herein, the beta-offset parameters correspond to beta-offsets of: HARQ-ACK less than or equal to 2 bits, HARQ-ACK greater than 2 bits and less than or equal to 11 bits, HARQ-ACK greater than 11 bits, CSI part 1 or CSI part 2 less than or equal to 11 bits, and CSI part 1 or CSI part 2 greater than 11 bit. The example of codes of the configuration information may be shown as follows.

```
BetaOffsets ::=            SEQUENCE {

    betaOffsetACK-Index1      INTEGER(0..31)    OPTIONAL, -- Need S

    betaOffsetACK-Index2      INTEGER(0..31)    OPTIONAL, -- Need S

    betaOffsetACK-Index3      INTEGER(0..31)    OPTIONAL, -- Need S

    betaOffsetCSI-Part1-Index1  INTEGER(0..31)  OPTIONAL, -- Need S

    betaOffsetCSI-Part1-Index2  INTEGER(0..31)  OPTIONAL, -- Need S

    betaOffsetCSI-Part2-Index1  INTEGER(0..31)  OPTIONAL, -- Need S

    betaOffsetCSI-Part2-Index2  INTEGER(0..31)  OPTIONAL, -- Need S

}
```

As an implementation, when a beta-offset is determined in a semi-static manner, each of indication parameters included in the beta-offset parameters includes multiple beta-offsets corresponding to at least one of: the types of PUSCHs, or, the types of uplink control information; and the indication parameters included in the beta-offset parameters include: beta-offsets of HARQ-ACK less than or equal to 2 bits, beta-offsets of HARQ-ACK greater than 2 bits and less than or equal to 11 bits, beta-offsets of HARQ-ACK greater than 11 bits, beta-offsets of CSI part 1 or CSI part 2 less than or equal to 11 bits, and beta-offsets of CSI part 1 or CSI part 2 greater than 11 bits. It may be understood that each field (i.e., betaOffsetACK - Index 1, betaOffsetACK-Index2, betaOffsetACK-Index3, betaOffsetCSI-Part1-Index1, betaOffsetCSI-Part1-Index2, betaOffsetCSI-Part2-Index1, betaOffsetCSI-Part2-Index2) of BetaOffsets includes multiple sets of parameters respectively corresponding to at least one of: different types of PUSCHs, or, different types of UCI.

As another implementation, when a beta-offset is determined in a dynamic manner, dynamically corresponding beta-offset parameters configured by the first set of configuration parameters include multiple beta-offsets corresponding to at least one of: the types of PUSCHs, or, the types of uplink control information.

As a fourth implementation, the at least one set of PUSCH configuration parameters may include a fourth set of configuration parameters, including at least one of: categories of uplink control information capable of being transmitted on different types of PUSCHs, or, payload sizes of uplink control information capable of being transmitted on different types of PUSCHs.

As an implementation, categories of a first type of uplink control information capable of being transmitted on PUSCH include none or at least one of: HARQ-ACK/NACK, CSI part 1, or CSI part 2; and the first type of uplink control information is any one of the types of uplink control information.

Herein, categories of uplink control information included in sets of the first type of uplink control information capable of being transmitted on different types of PUSCHs are different.

As an implementation, the categories of uplink control information included in the sets of the first type of uplink control information capable of being transmitted on different types of PUSCHs are different.

As an implementation, each of categories of a first type of uplink control information capable of being transmitted on different types of PUSCHs has a different payload size; and the first type of uplink control information is any one of the types of uplink control information.

According to the technical solutions of the embodiments of the disclosure, at least one of: different PUSCH types, or, different uplink control information types correspond to different PUSCH configuration parameters, especially for different service types, different service priorities, different logical channels, different DCI formats, different RNTIs for scrambling physical layer downlink control information for scheduling PUSCH, and different information carried by downlink control information, the terminal transmits, based on the PUSCH configuration parameter corresponding to at least one of the type of PUSCH or the type of uplink control information, the uplink control information, which meets the reliability requirements of transmission of different services.

The embodiment of the disclosure also provides a method for transmission of uplink control information. FIG. 2 is a flowchart of another method for transmission of uplink control information according to an embodiment of the disclosure. As shown in FIG. 2, the method includes the following operations.

In S201: a network device configures at least one set of Physical Uplink Shared Channel (PUSCH) configuration parameters for a terminal; different PUSCH configuration parameters corresponding to at least one of: different types of PUSCHs, or, different types of uplink control information.

In S202: the network device sends the at least one set of PUSCH configuration parameters to the terminal.

The embodiment is applicable to a scenario where the network device configures at least one set of PUSCH configuration parameters for the terminal, so that when the PUCCH resource for transmitting UCI and the PUSCH resource for transmitting data overlap and the processing time requirement is met, the UCI may be transmitted on the PUSCH. Herein the network device may be a base station or other network element equipment.

As an implementation, the network device sends the at least one set of PUSCH configuration parameters to the terminal, which includes: the network device sends the at least one set of PUSCH configuration parameters to the terminal through high-layer signaling.

In the embodiment, the type of PUSCH includes one of the followings that: data carried by PUSCH belongs to different service types or different service type groups; data carried by PUSCH belongs to different service priorities or different service priority groups; data carried by PUSCH belongs to different logical channels or different logical channel groups; downlink control information for scheduling PUSCH belongs to different physical layer Downlink Control Information (DCI) formats or different DCI format groups; Radio Network Temporary Identifiers (RNTIs) for scrambling physical layer downlink control information for scheduling PUSCH are different RNTIs or belong to different RNTI groups; and information carried by downlink control information for scheduling PUSCH is different.

In the embodiment, the type of uplink control information corresponds to at least one type of Physical Downlink Shared Channel (PDSCH). Herein, the type of PDSCH includes one of the followings that: data carried by PDSCH belongs to different service types or different service type groups; data carried by PDSCH belongs to different service priorities or different service priority groups; data carried by PDSCH belongs to different logical channels or different logical channel groups; downlink control information for scheduling PDSCH belongs to different DCI formats or different DCI format groups; RNTIs for scrambling physical layer downlink control information for scheduling PDSCH are different RNTIs or belong to different RNTI groups; and information carried by downlink control information for scheduling PDSCH is different.

In the embodiment, categories of the uplink control information include: Hybrid Automatic Repeat Request Acknowledgement/Negative Acknowledgement (HARQ-ACK/NACK), a first part of Channel State Information (CSI part 1), and a second part of Channel State Information (CSI part 2).

In the embodiment, the at least one set of PUSCH configuration parameters includes at least one of:

a first set of configuration parameters including state parameters corresponding to at least one of: different types of PUSCHs, or, different types of uplink control information, here, one of the state parameters indicates whether to allow a first type of uplink control information to be transmitted on a first type of PUSCH;
a second set of configuration parameters including scaling parameters corresponding to at least one of: different types of PUSCHs, or, different types of uplink control information, here, one of the scaling parameters is configured to limit the maximum number of Resource Elements (REs) assigned to uplink control information on a PUSCH;
a third set of configuration parameters including beta-offset parameters corresponding to at least one of: different types of PUSCHs, or, different types of uplink control information; here, one of the beta-offset parameters indicates beta-offsets of a first type of uplink control information relative to data carried by a first type of PUSCH; or
a fourth set of configuration parameters including at least one of categories of uplink control information capable of being transmitted on different types of PUSCHs, or, payload sizes of uplink control information capable of being transmitted on different types of PUSCHs.

Herein, the first type of PUSCH is any one of the types of PUSCHs; and the first type of uplink control information is any one of the types of uplink control information.

As a first implementation, the at least one set of PUSCH configuration parameters may include a first set of configuration parameters, and the first set of configuration parameters may be uci-OnPUSCH, for example, the description of the first set of configuration parameters of uci-OnPUSCH may refer to the aforementioned descriptions. Here, the first set of configuration parameters includes state parameters corresponding to at least one of: different types of PUSCHs, or, different types of uplink control information, and one of the state parameters indicates whether to allow a first type of uplink control information to be transmitted on a first type of PUSCH. For example, the state parameters include state 1 and state 2, state 1 indicates that a corresponding type of UCI is allowed to be transmitted on a corresponding type of PUSCH, and state 2 indicates that a corresponding type of UCI is not allowed to be transmitted on a corresponding type of PUSCH.

Herein when the first PUSCH configuration parameter is a configuration parameter in the first set of configuration parameters; the terminal transmits the uplink control information based on the first PUSCH configuration parameter, which includes: the terminal transmits, based on the state parameter in the first PUSCH configuration parameter, a corresponding type of uplink control information on a corresponding type of PUSCH, or does not transmit a corresponding type of uplink control information on a corresponding type of PUSCH.

As a second implementation, the at least one set of PUSCH configuration parameters include a second set of configuration parameters, and the second set of configuration parameters are the scaling parameters in the aforementioned uci-OnPUSCH parameter description, and one of the scaling parameters represents the maximum number of REs assigned to a first type of uplink control information on a first type of PUSCH.

As a third implementation, the at least one set of PUSCH configuration parameters may include a third set of configuration parameters, and the third set of configuration parameters may be the beta-offset parameters in the aforementioned uci-OnPUSCH parameter description, and one of the beta-offset parameters is configured to indicate beta-offsets of a certain type of UCI relative to data carried by a certain type of PUSCH. When DCI for scheduling PUSCH does not include the beta-offset indication field, the beta-offset parameters, which may be configured by a higher layer, are applied for code rate adjustment of UCI. Herein, the beta-offset parameters correspond to beta-offsets of: HARQ-ACK less than or equal to 2 bits, HARQ-ACK greater than 2 bits and less than or equal to 11 bits, HARQ-ACK greater than 11 bits, CSI part 1 or CSI part 2 less than or equal to 11 bits, and CSI part 1 or CSI part 2 greater than 11 bit.

As an implementation, when a beta-offset is determined in a semi-static manner, each of indication parameters included in the beta-offset parameters includes multiple beta-offsets corresponding to at least one of: the types of PUSCHs, or, the types of uplink control information; and the indication parameters included in the beta-offset parameters include: beta-offsets of HARQ-ACK less than or equal to 2 bits, beta-offsets of HARQ-ACK greater than 2 bits and less than or equal to 11 bits, beta-offsets of HARQ-ACK greater than 11 bits, beta-offsets of CSI part 1 or CSI part 2 less than or equal to 11 bits, and beta-offsets of CSI part 1 or CSI part 2 greater than 11 bits.

As another implementation, when a beta-offset is determined in a dynamic manner, dynamically corresponding beta-offset parameters configured by the first set of configuration parameters include multiple beta-offsets corresponding to at least one of: the types of PUSCHs, or, the types of uplink control information.

In the embodiment, when performing encoding and rate matching, the terminal performs mapping on REs reserved for UCI in order of ACK/NACK, CSI part 1 and CSI part 2, and maps data on the remaining resources.

As a fourth implementation, the at least one set of PUSCH configuration parameters may include a fourth set of configuration parameters, including at least one of: categories of uplink control information capable of being transmitted on different types of PUSCHs, or, payload sizes of uplink control information capable of being transmitted on different types of PUSCHs.

As an implementation, categories of a first type of uplink control information capable of being transmitted on PUSCH include none or at least one of: HARQ-ACK/NACK, CSI part 1, or, CSI part 2; and the first type of uplink control information is any one of the types of uplink control information.

Herein, categories of uplink control information included in sets of the first type of uplink control information capable of being transmitted on different types of PUSCHs are different.

As an implementation, the categories of uplink control information included in the sets of the first type of uplink control information capable of being transmitted on different types of PUSCHs are different.

As an implementation, each of categories of a first type of uplink control information capable of being transmitted on different types of PUSCHs has a different payload size; and the first type of uplink control information is any one of the types of uplink control information.

According to the technical solutions of the embodiments of the disclosure, at least one of: different PUSCH types, or, uplink control information types correspond to different PUSCH configuration parameters, especially for different service types, different service priorities, different logical channels, different DCI formats, different RNTIs for scrambling physical layer downlink control information for scheduling PUSCH, and different information carried by downlink control information, the terminal transmits, based on the PUSCH configuration parameter corresponding to at least the type of PUSCH or the type of uplink control information, the uplink control information, which meets the reliability requirements of transmission of different services.

The method for transmission of uplink control information according to the embodiment of the disclosure will be described below in conjunction with specific examples.

First example (corresponding to the first set of configuration parameters)

The base station configures two sets of uci-OnPUSCH parameters and corresponding states {disable, enable} to the terminal through high-layer signaling. The 'enable' represents that the corresponding type of UCI is allowed to be transmitted on the corresponding type of PUSCH, and the 'disable' represents that the corresponding type of UCI is not allowed to be transmitted on the corresponding type of PUSCH. The two sets of uci-OnPUSCH parameters correspond to a new RNTI for scrambling DCI for scheduling PUSCH and another RNTI for scrambling DCI for scheduling PUSCH, respectively.

When the terminal receives the DCI scrambled by the another RNTI, the state corresponding to the DCI scrambled by the another RNTI is 'enable'. When the PUSCH scheduled by the DCI scrambled by the another RNTI is transmitted in slot n, if this PUSCH resource and the PUCCH resource for transmitting UCI overlap and the processing time meets the regulations, the terminal multiplexes the UCI to the PUSCH for transmission. Correspondingly, when the terminal receives the DCI scrambled by the new RNTI, the terminal does not transmit the UCI on the PUSCH scheduled by the DCI scrambled by the new RNTI.

Second example (corresponding to the first set of configuration parameters)

The base station configures four sets of uci-OnPUSCH parameters and corresponding states {disable, disable, enable, enable} to the terminal through high-layer signaling. PUSCHs are divided into two types, namely PUSCH type 1 and PUSCH type 2, and the above two types of PUSCHs correspond to a new RNTI for scrambling DCI for scheduling PUSCH and another RNTI for scrambling DCI for scheduling PUSCH, respectively. UCI type 1 and UCI type 2 correspond to UCI corresponding to PDSCH type 1 and UCI corresponding to PDSCH type 2, respectively. Corresponding to the above PUSCH types and UCI types, there are four situations, i.e., {PUSCH type 1, UCI type 1}, {PUSCH type 1, UCI type 2}, {PUSCH type 2, UCI type 1}, {PUSCH type 2, UCI type 2}, where the four situations correspond to the above four states respectively.

When the terminal receives the DCI scrambled by the new RNTI, the state corresponding to the DCI scrambled by the new RNTI is 'disable', and when the PUSCH scheduled by the DCI scrambled by the new RNTI is transmitted in slot n, UCI with UCI type 1 and UCI with UCI type 2 are not allowed to be multiplexed to the PUSCH for transmission. When the terminal receives the DCI scrambled by another RNTI, the state corresponding to the DCI scrambled by the another RNTI is 'enable', and when the PUSCH scheduled by the DCI scrambled by the another RNTI is transmitted in slot n, if this PUSCH resource and the PUCCH resource for transmitting UCI overlap and the processing time meets the regulations, the terminal may multiplex UCI with UCI type 1 or UCI type 2 to the PUSCH for transmission.

Third example (corresponding to the second set of configuration parameters)

The base station configures two sets of scaling parameters i.e., {0.5, 0.8} to the terminal through high-layer signaling. The two sets of scaling parameters correspond to a new RNTI for scrambling DCI for scheduling PUSCH and another RNTI for scrambling DCI for scheduling PUSCH, respectively. When the terminal receives the DCI scrambled by the new RNTI, the scaling parameter corresponding to the DCI scrambled by the new RNTI is 0.5, and when the PUSCH scheduled by the DCI scrambled by the new RNTI is transmitted in slot n, the

$$0.5 \times \sum_{l=l_0}^{N_{\text{symb,all}}^{\text{PUSCH}}-1} M_{\text{sc}}^{\text{UCI}}(l)$$

maximum number of REs assigned to UCI is  . When the terminal receives the DCI scrambled by the another RNTI, the scaling parameter corresponding to the DCI scrambled by the another RNTI is 0.8, and when the PUSCH scheduled by the DCI scrambled by the another RNTIs is transmitted in slot n, the maximum

$$0.8 \times \sum_{l=l_0}^{N_{\text{symb,all}}^{\text{PUSCH}}-1} M_{\text{sc}}^{\text{UCI}}(l)$$

number of REs assigned to UCI is  . Herein, $M_{\text{sc}}^{\text{UCI}}(l)$ represents the number of REs available for UCI transmission on the Orthogonal Frequency Division Multiplexing (OFDM) symbol 1.

Fourth example (corresponding to the second set of configuration parameters)

PUSCHs are divided into two types, i.e., PUSCH type 1 and PUSCH type 2; and PUSCH type 1 and PUSCH type 2 correspond to a new RNTI for scrambling DCI for scheduling PUSCH and another RNTI for scrambling DCI for scheduling PUSCH, respectively. UCI is divided into two types, i.e., UCI type 1 and UCI type 2; and UCI type 1 and UCI type 2 correspond to UCI corresponding to PDSCH scheduled by the DCI scrambled by the new RNTI and UCI corresponding to PDSCH scheduled by the DCI scrambled by the another RNTI, respectively.

The base station configures four sets of scaling parameters, i.e., {0.5, 0.5, 0.8, 0.8} to the terminal through high-layer signaling, and the four sets of scaling parameters correspond to {PUSCH type 1, UCI type 1}, {PUSCH type 1, UCI type 2}, {PUSCH type 2. UCI type 1}, {PUSCH type 2, UCI type 2}, respectively. When the terminal receives the DCI scrambled by the new RNTI, the scaling parameter corresponding to the DCI scrambled by the new RNTI is 0.5, and when the PUSCH scheduled by the DCI scrambled by the new RNTI is transmitted in slot n, the maximum number

$$0.5 \times \sum_{l=l_0}^{N_{\text{symb,all}}^{\text{PUSCH}}-1} M_{\text{sc}}^{\text{UCI}}(l)$$

of REs assigned for UCI type 1 and UCI type 2 is  . When the terminal receives the DCI scrambled by the another RNTI, the scaling parameter corresponding to the DCI scrambled by the another RNTI is 0.8, and when the PUSCH scheduled by the DCI scrambled by the another RNTI is transmitted in slot n, the maximum number of REs

$$0.8 \times \sum_{l=l_0}^{N_{\text{symb,all}}^{\text{PUSCH}}-1} M_{\text{sc}}^{\text{UCI}}(l)$$

assigned for UCI type 1 and UCI type 2 is  . Herein, $M_{\text{sc}}^{\text{UCI}}(l)$ represents the number of REs available for UCI transmission on OFDM symbol 1.

Fifth example (corresponding to the third set of configuration parameters)

The embodiment is applicable to determine the value of BetaOffset in a semi-static manner. The base station configures multiple sets of BetaOffsets parameters to the user through high-layer signaling. By example of configuring two sets of parameters for HARQ-ACK less than or equal to 2 bits, for example, betaOffsetACK-Index1 is configured as {index 1, index 3} which correspond to a new RNTI for scrambling DCI for scheduling PUSCH and another RNTI for scrambling DCI for scheduling PUSCH, respectively. Herein, index 1 and index 3 are preset values in TS 38.213 table 9.3-1.

When the terminal receives the DCI scrambled by the new RNTI, the value of BetaOffsets corresponding to the DCI scrambled by the new RNTI takes index 1; and when the PUSCH scheduled by the DCI scrambled by the new RNTI is multiplexed, in slot n, with HARQ-ACK less than or equal to 2 bits, the value of BetaOffset of the HARQ-ACK takes index 1. When the terminal receives the DCI scrambled by the another RNTI, the value of BetaOffsets corresponding to the DCI scrambled by the another RNTI takes index 3; and when the PUSCH scheduled by the DCI scrambled by the another RNTI is multiplexed, in slot n, with HARQ-ACK less than or equal to 2 bits, the value of BetaOffset of the HARQ-ACK takes index 3.

Sixth example (corresponding to the third set of configuration parameters)

PUSCHs are divided into two types, i.e., PUSCH type 1 and PUSCH type 2; and PUSCH type 1 and PUSCH type 2 correspond to a new RNTI for scrambling DCI for scheduling PUSCH and another RNTI for scrambling DCI for scheduling PUSCH, respectively. UCI is divided into two types, i.e., UCI type 1 and UCI type 2; and UCI type 1 and UCI type 2 correspond to UCI corresponding to PDSCH scheduled by the DCI scrambled by the new RNTI and UCI corresponding to PDSCH scheduled by the DCI scrambled by the another RNTI, respectively.

The embodiment is applicable to determine the value of BetaOffset in a semi-static manner. The base station configures multiple sets of BetaOffsets parameters to the terminal through high-layer signaling. By example of HARQ-ACK less than or equal to 2 bits, that is, betaOffsetACK-Index1 is configured as {index 1, index 1, index 3, index 3}, corresponding to {PUSCH type 1, UCI type 1}, {PUSCH type 1, UCI type 2}, {PUSCH type 2, UCI type 1}, {PUSCH type 2, UCI type 2} respectively. Herein, index 1 and index 3 are preset values in TS 38.213 table 9.3-1.

When the terminal receives the DCI scrambled by the new RNTI, the DCI scrambled by the new RNTI corresponds to index 1; and when the PUSCH scheduled by the DCI scrambled by the new RNTI is multiplexed, in slot n, with HARQ-ACK with UCI type 1 or UCI type 2 and less than or equal to 2 bits, the value of BetaOffset of the HARQ-ACK takes index 1. When the terminal receives the DCI scrambled by the another RNTI, the DCI scrambled by the another RNTI corresponds to index 3; and when the PUSCH scheduled by the DCI scrambled by the another RNTI is multiplexed, in slot n, with HARQ-ACK with UCI type 1 or UCI type 2 and less than or equal to 2 bits, the value of BetaOffset of the HARQ-ACK takes index 3.

Seventh example (corresponding to the fourth set of configuration parameters)

It is specified in a predefined manner or in a manner of configuration of the base station through the high-layer signaling that PUSCH scheduled by the DCI scrambled by the new RNTI may only be multiplexed with ACK/NACK and with CSI part 1 and CSI part 2 less than or equal to 11 bits, and the multiplexing of UCI with PUSCH scheduled by the DCI scrambled by the another RNTI is consistent with descriptions of the existing standard, that is, when polar encoding is adopted, the number of modulation symbols after encoding ACK/NACK, CSI part 1 and CSI part 2 are:

$$Q'_{\mathrm{ACK}} = \min\left\{\left\lceil \frac{(O_{\mathrm{ACK}} + L_{\mathrm{ACK}})\cdot \beta_{\mathrm{offset}}^{\mathrm{PUSCH}} \cdot \sum\limits_{l=0}^{N_{\mathrm{symb,all}}^{\mathrm{PUSCH}}-1} M_{\mathrm{sc}}^{\mathrm{UCI}}(l)}{\sum\limits_{r=0}^{C_{\mathrm{UL\text{-}SCH}}-1} K_r} \right\rceil, \left\lceil \alpha \cdot \sum\limits_{l=l_0}^{N_{\mathrm{symb,all}}^{\mathrm{PUSCH}}-1} M_{\mathrm{sc}}^{\mathrm{UCI}}(l) \right\rceil \right\};$$

$$Q'_{\mathrm{CSI\text{-}1}} = \min\left\{\left\lceil \frac{(O_{\mathrm{CSI\text{-}1}} + L_{\mathrm{CSI\text{-}1}})\cdot \beta_{\mathrm{offset}}^{\mathrm{PUSCH}} \cdot \sum\limits_{l=0}^{N_{\mathrm{symb,all}}^{\mathrm{PUSCH}}-1} M_{\mathrm{sc}}^{\mathrm{UCI}}(l)}{\sum\limits_{r=0}^{C_{\mathrm{UL\text{-}SCH}}-1} K_r} \right\rceil, \left\lceil \alpha \cdot \sum\limits_{l=0}^{N_{\mathrm{symb,all}}^{\mathrm{PUSCH}}-1} M_{\mathrm{sc}}^{\mathrm{UCI}}(l) \right\rceil - Q'_{\mathrm{ACK}} \right\};$$

$$Q'_{\mathrm{CSI\text{-}2}} = \min\left\{\left\lceil \frac{(O_{\mathrm{CSI\text{-}2}} + L_{\mathrm{CSI\text{-}2}})\cdot \beta_{\mathrm{offset}}^{\mathrm{PUSCH}} \cdot \sum\limits_{l=0}^{N_{\mathrm{symb,all}}^{\mathrm{PUSCH}}-1} M_{\mathrm{sc}}^{\mathrm{UCI}}(l)}{\sum\limits_{r=0}^{C_{\mathrm{UL\text{-}SCH}}-1} K_r} \right\rceil, \left\lceil \alpha \cdot \sum\limits_{l=0}^{N_{\mathrm{symb,all}}^{\mathrm{PUSCH}}-1} M_{\mathrm{sc}}^{\mathrm{UCI}}(l) \right\rceil - Q'_{\mathrm{ACK}} - Q'_{\mathrm{CSI\text{-}1}} \right\}$$

Eighth example (corresponding to the fourth set of configuration parameters)

PUSCHs are divided into two types, i.e., PUSCH type 1 and PUSCH type 2; and PUSCH type 1 and PUSCH type 2 correspond to a new RNTI for scrambling DCI for scheduling PUSCH and another RNTI for scrambling DCI for scheduling PUSCH, respectively. UCI is divided into two types, i.e., UCI type 1 and UCI type 2; and UCI type 1 and UCI type 2 correspond to UCI corresponding to PDSCH scheduled by the DCI scrambled by the new RNTI and UCI corresponding to PDSCH scheduled by the DCI scrambled by the another RNTI, respectively.

It is specified in a fixed manner in specification or in a manner of configuration of the base station through the high-layer signaling that PUSCH type 1 may only be multiplexed with ACK/NACK with UCI type 1 and UCI type 2 and CSI part 1 and CSI part 2 less than or equal to 11 bits, and PUSCH type 2 may be multiplexed with each category of UCI type 1 and UCI type 2, and with the Payload Size of each category.

In the embodiment of the disclosure, a parameter 'new RNTI' configured by Radio Resource Control (RRC) is introduced for scheduling-based URLLC service transmission, to indicate the selection of Modulation and Coding Scheme (MCS) table. That is, when the new RNTI is configured by RRC, and when the DCI scrambled by the new RNTI schedules data, the new 64QAM MCS table is used; otherwise, it is consistent with the existing UE behavior, that is, the existing 64QAM MCS table is used.

The embodiment of the disclosure also provides a terminal. FIG. 3 is a diagram of a composition structure of a terminal according to an embodiment of the disclosure. As shown in FIG. 3, the terminal includes a selection unit 31 and a transmission unit 32.

The selection unit 31 is configured to select a corresponding first Physical Uplink Shared Channel (PUSCH) configuration parameter, according to at least one of a type of PUSCH or a type of uplink control information, herein, different PUSCH configuration parameters correspond to at least one of: different types of PUSCHs, or, different types of uplink control information.

The transmission unit 32 is configured to transmit, based on the first PUSCH configuration parameter, uplink control information.

In the embodiment, as an implementation, the transmission unit 32 is further configured to receive at least one set of PUSCH configuration parameters configured by a network device; or

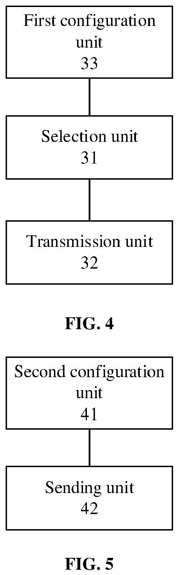

Or, as shown in FIG. 4, the terminal further includes a first configuration unit 33 configured to configure, in a predefined manner, at least one set of PUSCH configuration parameters.

Herein, as an example, the transmission unit 32 is configured to receive the at least one set of PUSCH configuration parameters configured by the network device through high-layer signaling.

In the embodiment, the type of PUSCH includes one of the followings that: data carried by PUSCH belongs to different service types or different service type groups; data carried by PUSCH belongs to different service priorities or different service priority groups; data carried by PUSCH belongs to different logical channels or different logical channel groups; downlink control information for scheduling PUSCH belongs to different physical layer Downlink Control Information (DCI) formats or different DCI format groups; Radio Network Temporary Identifiers (RNTIs) for scrambling physical layer downlink control information for scheduling PUSCH are different RNTIs or belong to different RNTI groups; and information carried by downlink control information for scheduling PUSCH is different.

In the embodiment, the type of uplink control information corresponds to at least one type of Physical Downlink Shared Channel (PDSCH).

Herein, the type of PDSCH includes one of the followings that: data carried by PDSCH belongs to different service types or different service type groups; data carried by PDSCH belongs to different service priorities or different service priority groups; data carried by PDSCH belongs to different logical channels or different logical channel groups; downlink control information for scheduling PDSCH belongs to different DCI formats or different DCI format groups; RNTIs for scrambling physical layer downlink control information for scheduling PDSCH are different RNTIs or belong to different RNTI groups; and information carried by downlink control information for scheduling PDSCH is different.

In the embodiment, categories of the uplink control information include: Hybrid Automatic Repeat Request Acknowledgement/Negative Acknowledgement (HARQ-ACK/NACK), a first part of Channel State Information (CSI part 1), and a second part of Channel State Information (CSI part 2).

In the embodiment, the at least one set of PUSCH configuration parameters includes at least one of:

a first set of configuration parameters including state parameters corresponding to at least one of: different types of PUSCHs, or, different types of uplink control information, here, one of the state parameters indicates whether to allow a first type of uplink control information to be transmitted on a first type of PUSCH;

a second set of configuration parameters including scaling parameters corresponding to at least one of: different types of PUSCHs, or, different types of uplink control information, here, one of the scaling parameters is configured to limit the maximum number of Resource Elements (REs) assigned to uplink control information on a PUSCH;

a third set of configuration parameters including beta-offset parameters corresponding to at least one of: different types of PUSCHs, or, different types of uplink control information; here, one of the beta-offset parameters indicates beta-offsets of a first type of uplink control information relative to data carried by a first type of PUSCH; or

a fourth set of configuration parameters including at least one of: categories of uplink control information capable of being transmitted on different types of PUSCHs, or, payload sizes of uplink control information capable of being transmitted on different types of PUSCHs.

Herein, the first type of PUSCH is any one of the types of PUSCHs; and the first type of uplink control information is any one of the types of uplink control information.

As an implementation, the transmission unit 32 is configured to, when the first PUSCH configuration parameter is a configuration parameter in the first set of configuration parameters, transmit a corresponding type of uplink control information on a corresponding type of PUSCH, based on the state parameter in the first PUSCH configuration parameter, or does not transmit a corresponding type of uplink control information on a corresponding type of PUSCH.

As an implementation, categories of a first type of uplink control information capable of being transmitted on PUSCH include none or at least one of: HARQ-ACK/NACK, CSI part 1, or CSI part 2; and the first type of uplink control information is any one of the types of uplink control information.

As an implementation, categories of uplink control information included in sets of the first type of uplink control information capable of being transmitted on different types of PUSCHs are different.

As an implementation, each of categories of a first type of uplink control information capable of being transmitted on different types of PUSCHs has a different payload size; and the first type of uplink control information is any one of the types of uplink control information.

As an implementation, when a beta-offset is determined in a semi-static manner, each of indication parameters included in the beta-offset parameters includes multiple beta-offsets corresponding to at least one of: the types of PUSCHs, or, the types of uplink control information; and the indication parameters included in the beta-offset parameters include beta-offsets of HARQ-ACK less than or equal to 2 bits, beta-offsets of HARQ-ACK greater than 2 bits and less than or equal to 11 bits, beta-offsets of HARQ-ACK greater than 11 bits, beta-offsets of CSI part 1 or CSI part 2 less than or equal to 11 bits, and beta-offsets of CSI part 1 or CSI part 2 greater than 11 bits.

As an implementation, when a beta-offset is determined in a dynamic manner, dynamically corresponding beta-offset parameters configured by the first set of configuration parameters include multiple beta-offsets corresponding to at least one of: the types of PUSCHs, or, the types of uplink control information.

In the embodiment of the disclosure, the selection unit 31 and the first configuration unit 33 in the terminal may be implemented by Central Processing Unit (CPU), Digital Signal Processor (DSP), Microcontroller Unit (MCU) or Field-Programmable Gate Array (FPGA) in the terminal, in actual applications; and the transmission unit 32 in the terminal may be implemented by communication modules (including basic communication suite, operating system, communication module, standardized interface and protocol, etc.) and a transceiver antenna, in actual applications.

The embodiment of the disclosure also provides a terminal, including a memory, a processor, and a computer program stored on the memory and executable on the processor, and the processor is configured to execute the program to implement operations of the method for transmission of uplink control information applied to a terminal according to the aforementioned embodiment of the disclosure.

It should be noted that when the terminal provided by the above embodiment transmits uplink control information, the division of the above program modules is described as an example only. In actual applications, the above processing may be assigned to be done by different program modules as needed, that is, the internal structure of the terminal is divided into different program modules to complete all or a part of the processing as described above. Furthermore, the terminal provided by the above embodiment and the method embodiment for transmission of uplink control information belong to the same concept, and the specific implementation thereof is detailed in the method embodiment, which will not be repeated here.

The embodiment of the disclosure also provides a network device. FIG. 5 is a diagram of a composition structure of a network device according to an embodiment of the disclosure. As shown in FIG. 5, the network device includes a second configuration unit 41 and a sending unit 42.

The second configuration unit 41 is configured to configure at least one set of Physical Uplink Shared Channel (PUSCH) configuration parameters for a terminal; herein, different PUSCH configuration parameters correspond to at least one of: different types of PUSCHs, or, different types of uplink control information.

The sending unit 42 is configured to send the at least one set of PUSCH configuration parameters to the terminal.

As an implementation, the sending unit 42 is configured to send the at least one set of PUSCH configuration parameters to the terminal, through high-layer signaling.

In the embodiment, the type of PUSCH includes one of the followings that: data carried by PUSCH belongs to different service types or different service type groups; data carried by PUSCH belongs to different service priorities or different service priority groups; data carried by PUSCH belongs to different logical channels or different logical channel groups; downlink control information for scheduling PUSCH belongs to different physical layer Downlink Control Information (DCI) formats or different DCI format groups; Radio Network Temporary Identifiers (RNTIs) for scrambling physical layer downlink control information for scheduling PUSCH are different RNTIs or belong to different RNTI groups; and information carried by downlink control information for scheduling PUSCH is different.

In the embodiment, the type of uplink control information corresponds to at least one type of Physical Downlink Shared Channel (PDSCH).

Herein the type of PDSCH includes one of the followings that: data carried by PDSCH belongs to different service types or different service type groups; data carried by PDSCH belongs to different service priorities or different service priority groups; data carried by PDSCH belongs to different logical channels or different logical channel groups; downlink control information for scheduling PDSCH belongs to different DCI formats or different DCI format groups; RNTIs for scrambling physical layer downlink control information for scheduling PDSCH are different RNTIs or belong to different RNTI groups; and information carried by downlink control information for scheduling PDSCH is different.

In the embodiment, categories of the uplink control information include: Hybrid Automatic Repeat Request Acknowledgement/Negative Acknowledgement (HARQ-ACK/NACK), a first part of Channel State Information (CSI part 1), and a second part of Channel State Information (CSI part 2).

In the embodiment, the at least one set of PUSCH configuration parameters includes at least one of:

a first set of configuration parameters including state parameters corresponding to at least one of different types of PUSCHs, or, different types of uplink control information, here, one of the state parameters indicates whether to allow a first type of uplink control information to be transmitted on a first type of PUSCH;

a second set of configuration parameters including scaling parameters corresponding to at least one of different types of PUSCHs, or, different types of uplink control information, here, one of the scaling parameters is configured to limit the maximum number of Resource Elements (REs) assigned to uplink control information on a PUSCH;

a third set of configuration parameters including beta-offset parameters corresponding to at least one of: different types of PUSCHs, or, different types of uplink control information; here, one of the beta-offset parameters indicates beta-offsets of a first type of uplink control information relative to data carried by a first type of PUSCH; or

a fourth set of configuration parameters including at least one of: categories of uplink control information capable of being transmitted on different types of PUSCHs, or, payload sizes of uplink control information capable of being transmitted on different types of PUSCHs.

Herein, the first type of PUSCH is any one of the types of PUSCHs; and the first type of uplink control information is any one of the types of uplink control information.

As an implementation, categories of a first type of uplink control information capable of being transmitted on PUSCH include none or at least one of: HARQ-ACK/NACK, CSI part 1, or, CSI part 2; and the first type of uplink control information is any one of the types of uplink control information.

As an implementation, categories of uplink control information included in sets of the first type of uplink control information capable of being transmitted on different types of PUSCHs are different.

As an implementation, each of categories of a first type of uplink control information capable of being transmitted on different types of PUSCHs has a different payload size; and the first type of uplink control information is any one of the types of uplink control information.

As an implementation, when a beta-offset is determined in a semi-static manner, each of indication parameters included in the beta-offset parameters includes multiple beta-offsets corresponding to at least one of: the types of PUSCHs, or, the type of uplink control information; and the indication parameters included in the beta-offset parameters include: beta-offsets of HARQ-ACK less than or equal to 2 bits, beta-offsets of HARQ-ACK greater than 2 bits and less than or equal to 11 bits, beta-offsets of HARQ-ACK greater than 11 bits, beta-offsets of CSI part 1 or CSI part 2 less than or equal to 11 bits, and beta-offsets of CSI part 1 or CSI part 2 greater than 11 bits.

As an implementation, when a rate beta-offset is determined in a dynamic manner, dynamically corresponding beta-offset parameters configured by the first set of configuration parameters include multiple beta-offsets corresponding to at least one of: the type of PUSCHs, or, the type of uplink control information.

In the embodiment of the disclosure, the second configuration unit 41 in the network device may be implemented by CPU, DSP, MCU or FPGA in the network device, in actual applications; and the sending unit 42 in the network device may be implemented by communication modules (including basic communication suite, operating system, communication module, standardized interface and protocol, etc.) and a transceiver antenna, in actual applications.

The embodiment of the disclosure also provides a network device, including a memory, a processor, and a computer program stored on the memory and executable on the processor, and the processor is configured to execute the program to implement operations of the method for transmission of uplink control information applied to a network device according to the aforementioned embodiment of the disclosure.

It should be noted that when the network device provided by the above embodiment transmits uplink control information, the division of the above program modules is described as an example only. In actual applications, the above processing may be allocated to be done by different program modules as needed, that is, the internal structure of the network device is divided into different program modules to complete all or a part of the processing as described above. Furthermore, the network device provided by the above embodiment and the method embodiment for transmission of uplink control information belong to the same concept, and the specific implementation thereof is detailed in the method embodiment, which will not be repeated here.

In the embodiment of the disclosure, it may be understood that the memory may be a volatile memory or a non-volatile memory, and may also include both volatile memory and non-volatile memory. Herein the non-volatile memory may be Read Only Memory (ROM), Programmable Read-Only Memory (PROM), Erasable Programmable Read-Only Memory (EPROM), Electrically Erasable Programmable Read-Only Memory (EEPROM), Ferromagnetic Random Access Memory (FRAM), Flash Memory, magnetic surface memory, optical disk, or Compact Disc Read-Only Memory (CD-ROM); the magnetic surface memory may be magnetic disk memory or magnetic tape memory. The volatile memory may be Random Access Memory (RAM), which is used as an external cache. By way of exemplary but not limiting description, many forms of RAMs are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), Direct Rambus Random Access Memory (DRRAM). The memories described in the embodiments of the disclosure are intended to include, but are not limited to, these and any other suitable types of memories.

The above methods disclosed by the embodiments of the disclosure may be applied to a processor or implemented by the processor. The processor may be an integrated circuit chip with signal processing capabilities. In the implementation, the operations of the above methods may be completed by hardware integrated logic circuits in the processor or instructions in the form of software. The above processor may be a general-purpose processor, DSP, or other programmable logic devices, discrete gates or transistor logic devices, discrete hardware device etc. The processor may implement or execute the methods, operations, and logical block diagrams disclosed by the embodiments of the disclosure. The general-purpose processor may be a microprocessor or any conventional processor. For the operations of the methods disclosed by the embodiments of the disclosure, they may be embodied directly as being executed and completed by a hardware decoding processor, or executed and completed by a combination of hardware and software modules in the decoding processor. The software module may be located in a storage medium, and the storage medium is located in a memory, the processor reads information in the memory, and completes the operations of the aforementioned methods in combination with hardware thereof.

The embodiment of the disclosure also provides a computer-readable storage medium not covered by the invention, having stored thereon a computer program that, when executed by a processor, causes the processor to implement the operations of the method for transmission of uplink control information applied to a terminal according to the aforementioned embodiment of the disclosure or the operations of the method for transmission of uplink control information applied to a network device according to the aforementioned embodiment of the disclosure.

In the embodiments provided by the disclosure, it should be understood that the disclosed device and method may be implemented in other ways. The device embodiment as described above is merely illustrative. For example, the division of the units is only a division based on logical functions, and there may be other divisions in actual implementation, for example: multiple units or components may be combined, or may be integrated into another system, or some features may be ignored or may not be implemented. Furthermore, the coupling, or direct coupling, or communication connection between the components shown or discussed may be indirect coupling or communication connection through some interfaces, devices or units, and may be electrical, mechanical or in other forms.

The above units described as separate components may be or may not be physically separate, and the components displayed as units may be or may not be physical units, that is, they may be located in one place or distributed on multiple network units; some or all of the units may be selected according to actual needs to achieve the purpose of the solutions of the embodiments.

Furthermore, all the functional units in the embodiments of the disclosure may be integrated into one processing unit, or each of the units may be used as a unit individually, or two or more of the units may be integrated into one unit; the units as integrated above may be implemented in the form of hardware or in the form of hardware plus software functional units.

Those ordinarily skilled in the art may understand that all or part of the operations of the above method embodiments may be implemented by hardware relevant to program instructions, the aforementioned program may be stored in a computer-readable storage medium, and the program performs operations including the above method embodiments when being executed; and the aforementioned storage medium includes various media that may store program codes, such as mobile storage device, ROM, RAM, magnetic disk, or optical disk etc.

Or, when the above integrated unit of the disclosure is implemented in the form of software function module and sold or used as an independent product, it may also be stored in a computer-readable storage medium. Based on such understanding, the technical solutions of the embodiments of the disclosure may be embodied in the form of software product in essence, or the part that contributes to the related art may be embodied in the form of software product, the computer software product is stored in a storage medium and includes instructions for a computer device (which may be a personal computer, a server, or a network device, etc.) to execute all or a part of the methods described in the embodiments of the disclosure. The aforementioned storage medium includes various media that may store program codes, such as mobile storage device, ROM, RAM, magnetic disk, or optical disk etc.

The methods disclosed by the method embodiments provided by the disclosure may be combined arbitrarily without conflict to obtain new method embodiments.

The features disclosed by the product embodiments provided by the disclosure may be combined arbitrarily without conflict to obtain new product embodiments.

The features disclosed by the method or device embodiments provided by the disclosure may be combined arbitrarily without conflict to obtain new method embodiments or new device embodiments.

The above descriptions are only specific implementations of the disclosure. Therefore, the protection scope of the disclosure should be subject to the protection scope of the claims.

**Claims**

1. A method for transmission of uplink control information, comprising:

selecting (101), by a terminal, from at least one set of Physical Uplink Shared Channel, PUSCH, configuration parameters, a corresponding first PUSCH configuration parameter, according to at least one of a type of PUSCH or a type of uplink control information, wherein the at least one set of PUSCH configuration parameters comprises a set of scaling parameters corresponding to at least one of: different types of PUSCHs, or, different types of uplink control information, and each of the scaling parameters is configured to limit, when it is used by the terminal, a maximum number of Resource Elements, REs, assigned to a respective uplink control information on PUSCH; and
transmitting (102), by the terminal, the uplink control information, based on the first PUSCH configuration parameter.

2. The method of claim 1, further comprising:

receiving, by the terminal, the at least one set of PUSCH configuration parameters configured by a network device; or
configuring, in a predefined manner, the at least one set of PUSCH configuration parameters for the terminal.

3. The method of claim 2, wherein receiving, by the terminal, the at least one set of PUSCH configuration parameters configured by the network device comprises:
receiving, by the terminal, the at least one set of PUSCH configuration parameters configured by the network device through high-layer signaling.

4. The method of any one of claims 1 to 3, wherein the type of PUSCH comprises one of the followings that:

data carried by PUSCH belongs to different service types or different service type groups;
data carried by PUSCH belongs to different service priorities or different service priority groups;
data carried by PUSCH belongs to different logical channels or different logical channel groups;
downlink control information for scheduling PUSCH belongs to different physical layer Downlink Control Information, DCI, formats or different DCI format groups;
Radio Network Temporary Identifiers, RNTIs, for scrambling physical layer downlink control information for scheduling PUSCH are different RNTIs or belong to different RNTI groups; and
information carried by downlink control information for scheduling PUSCH is different.

5. The method of any one of claims 1 to 3, wherein the type of uplink control information corresponds to at least one type of information carried in Downlink Control Information, DCI, for scheduling a Physical Downlink Shared Channel, PDSCH.

6. The method of any one of claims 1 to 3, wherein categories of the uplink control information comprise: Hybrid Automatic Repeat Request Acknowledgement/Negative Acknowledgement, HARQ-ACK/NACK, a first part of Channel State Information, CSI part 1, and a second part of Channel State Information, CSI part 2.

7. The method of any one of claims 1 to 3, wherein the at least one set of PUSCH configuration parameters further comprises at least one of:

a set of state parameters corresponding to at least one of: the different types of PUSCHs, or, the different types of uplink control information, and each of the state parameters indicates whether to allow a first type of uplink control information to be transmitted on a first type of PUSCH;
a set of beta-offset parameters corresponding to at least one of: the different types of PUSCHs, or, the different types of uplink control information, and each of the beta-offset parameters indicates beta-offsets of a first type of uplink control information relative to data carried by a first type of PUSCH; or,

at least one of: categories of uplink control information capable of being transmitted on the different types of PUSCHs, or, payload sizes of uplink control information capable of being transmitted on the different types of PUSCHs;

wherein the first type of PUSCH is any one of the types of PUSCHs; and the first type of uplink control information is any one of the types of uplink control information.

8. The method of claim 7, wherein categories of a first type of uplink control information capable of being transmitted on PUSCH comprise none or at least one of: Hybrid Automatic Repeat Request Acknowledgement/Negative Acknowledgement, HARQ-ACK/NACK, a first part of Channel State Information, CSI part 1, or, a second part of Channel State Information, CSI part 2; and

the first type of uplink control information is any one of the types of uplink control information, wherein categories of uplink control information comprised in sets of the first type of uplink control information capable of being transmitted on the different types of PUSCHs are different.

9. A method for transmission of uplink control information, comprising:

configuring (201), by a network device, at least one set of Physical Uplink Shared Channel, PUSCH, configuration parameters for a terminal, wherein the at least one set of PUSCH configuration parameters comprises a set of scaling parameters corresponding to at least one of: different types of PUSCHs, or, different types of uplink control information, and each of the scaling parameters is configured to limit, when it is used by the terminal, a maximum number of Resource Elements, REs, assigned to a respective uplink control information on PUSCH; and

sending (202), by the network device, the at least one set of PUSCH configuration parameters to the terminal.

10. The method of claim 9, wherein sending, by the network device, the at least one set of PUSCH configuration parameters to the terminal comprises:
sending, by the network device, the at least one set of PUSCH configuration parameters to the terminal, through high-layer signaling.

11. The method of claim 9 or 10, wherein the type of PUSCH comprises one of the followings that:

data carried by PUSCH belongs to different service types or different service type groups;
data carried by PUSCH belongs to different service priorities or different service priority groups;
data carried by PUSCH belongs to different logical channels or different logical channel groups;
downlink control information for scheduling PUSCH belongs to different physical layer Downlink Control Information, DCI, formats or different DCI format groups;
Radio Network Temporary Identifiers, RNTIs, for scrambling physical layer downlink control information for scheduling PUSCH are different RNTIs or belong to different RNTI groups; and
information carried by downlink control information for scheduling PUSCH is different.

12. The method of claim 9 or 10, wherein the type of uplink control information corresponds to at least one type of information carried in Downlink Control Information, DCI, for scheduling a Physical Downlink Shared Channel, PDSCH.

13. The method of claim 9 or 10, wherein the at least one set of PUSCH configuration parameters further comprises at least one of:

a set of state parameters corresponding to at least one of: the different types of PUSCHs, or, the different types of uplink control information, and each of the state parameters indicates whether to allow a first type of uplink control information to be transmitted on a first type of PUSCH;
a set of beta-offset parameters corresponding to at least one of: the different types of PUSCHs, or, the different types of uplink control information, and each of the beta-offset parameters indicates beta-offsets of a first type of uplink control information relative to data carried by a first type of PUSCH; or,
at least one of: categories of uplink control information capable of being transmitted on the different types of PUSCHs, or, payload sizes of uplink control information capable of being transmitted on the different types of PUSCHs;
wherein the first type of PUSCH is any one of the types of PUSCHs; and the first type of uplink control information is any one of the types of uplink control information.

14. A terminal, comprising:

a selection unit, configured to select a corresponding first Physical Uplink Shared Channel, PUSCH, configuration parameter from at least one set of PUSCH configuration parameters, according to at least one of a type of PUSCH or a type of uplink control information, wherein the at least one set of PUSCH configuration parameters comprises a set of scaling parameters corresponding to at least one of: different types of PUSCHs, or, different types of uplink control information, and each of the scaling parameters is configured to limit, when it is used by the terminal, a maximum number of Resource Elements, REs, assigned to a respective uplink control information on PUSCH; and
a transmission unit, configured to transmit, based on the first PUSCH configuration parameter, uplink control information.

15. A network device, comprising means adapted to perform the method of any one of claims 9-13.

**Patentansprüche**

1. Verfahren zum Übertragen von Uplink-Steuerinformationen, umfassend:

Auswählen (101), durch ein Endgerät, aus mindestens einem Satz von Physical-Uplink-Shared-Channel (PUSCH) -Konfigurationsparametern, eines entsprechenden ersten PUSCH-Konfigurationsparameters gemäß mindestens einem aus einem Typ von PUSCH oder einem Typ von Uplink-Steuerinformationen, wobei der mindestens eine Satz von PUSCH-Konfigurationsparametern einen Satz von Skalierungsparametern umfasst, der mindestens einem aus Folgendem entspricht: unterschiedliche Typen PUSCHs oder unterschiedliche Typen Uplink-Steuerinformationen, und wobei jeder der Skalierungsparameter konfiguriert ist, um, wenn er vom Endgerät verwendet wird, eine maximale Anzahl von Ressourcenelementen (REs) zu beschränken, die entsprechenden Uplink-Steuerinformationen auf PUSCH zugeordnet sind; und
Übertragen (102), durch ein Endgerät, der Uplink-Steuerinformationen, basierend auf dem ersten PUSCH-Konfigurationsparameter.

2. Verfahren nach Anspruch 1, ferner umfassend:

Empfangen, durch das Endgerät, des mindestens einen Satzes von PUSCH-Konfigurationsparametern, konfiguriert durch ein Netzwerkgerät; oder
Konfigurieren, auf eine vordefinierte Weise, des mindestens einen Satzes von PUSCH-Konfigurationsparametern für das Endgerät.

3. Verfahren nach Anspruch 2, wobei das Empfangen, durch das Endgerät, des mindestens einen Satzes von PUSCH-Konfigurationsparametern, konfiguriert durch das Netzwerkgerät, Folgendes umfasst:
Empfangen, durch das Endgerät, des mindestens einen Satzes von PUSCH-Konfigurationsparametern, konfiguriert durch das Netzwerkgerät, durch Signalübertragung in einer hohen Schicht.

4. Verfahren nach einem der Ansprüche 1 bis 3, wobei der Typ von PUSCH eines des Folgenden umfasst:

Daten, die von PUSCH getragen werden, gehören zu unterschiedlichen Diensttypen oder unterschiedlichen Diensttypgruppen;
Daten, die von PUSCH getragen werden, gehören zu unterschiedlichen Dienstprioritäten oder unterschiedlichen Dienstprioritätsgruppen;
Daten, die von PUSCH getragen werden, gehören zu unterschiedlichen logischen Kanälen oder zu unterschiedlichen Gruppen von logischen Kanälen;
Downlink-Steuerinformationen zum Planen von PUSCH gehören zu unterschiedlichen Formaten von Downlink-Steuerinformationen (downlink control information, DCI) der physikalischen Schicht oder unterschiedlichen DCI-Formatgruppen;
Radio Network Temporary Identifiers (RNTIs) zum Scrambling von Downlink-Steuerinformationen der physikalischen Schicht zum Planen von PUSCH sind unterschiedliche RNTIs oder gehören zu unterschiedlichen RNTI-Gruppen; und

Informationen, die durch Downlink-Steuerinformationen getragen werden, zum Planen von PUSCH sind unterschiedlich.

5. Verfahren nach einem der Ansprüche 1 bis 3, wobei der Typ von Uplink-Steuerinformationen mindestens einem Typ von Informationen entspricht, die in Downlink-Steuerinformationen (DCI) getragen werden, zum Planen eines Physical Downlink Shared Channel (PDSCH).

6. Verfahren nach einem der Ansprüche 1 bis 3, wobei Kategorien der Uplink-Steuerinformationen Folgendes umfassen: Hybrid Automatic Repeat Request Acknowledgement/Negative Acknowledgement (HARQ-ACK/NACK), einen ersten Teil von Kanalzustandsinformationen (CSI Teil 1) und einen zweiten Teil von Kanalzustandsinformationen (CSI Teil 2).

7. Verfahren nach einem der Ansprüche 1 bis 3, wobei der mindestens eine Satz PUSCH-Konfigurationsparameter ferner mindestens eines aus Folgendem umfasst:

einen Satz Zustandsparameter, die mindestens einem aus Folgendem entsprechen: den unterschiedlichen Typen von PUSCHs oder den unterschiedlichen Typen von Uplink-Steuerinformationen, und jeder der Zustandsparameter gibt an, ob zugelassen werden soll, dass ein erster Typ von Uplink-Steuerinformationen auf einem ersten Typ von PUSCH übertragen wird;

einen Satz Beta-Offset-Parameter, die mindestens einem aus Folgendem entsprechen: den unterschiedlichen Typen von PUSCHs oder den unterschiedlichen Typen von Uplink-Steuerinformationen, und jeder der Beta-Offset-Parameter gibt Beta-Offsets eines ersten Typs von Uplink-Steuerinformationen relativ zu Daten an, die von einem ersten Typ von PUSCH getragen werden; oder

mindestens eines aus Folgendem: Kategorien von Uplink-Steuerinformationen, die auf unterschiedlichen Typen von PUSCHs übertragen werden können, oder Nutzdatengrößen von Uplink-Steuerinformationen, die auf den unterschiedlichen Typen von PUSCHs übertragen werden können;

wobei der erste Typ von PUSCH jeglicher der Typen von PUSCHs ist; und der erste Typ von Uplink-Steuerinformationen jeglicher der Typen von Uplink-Steuerinformationen ist.

8. Verfahren nach Anspruch 7, wobei Kategorien eines ersten Typs von Uplink-Steuerinformationen, die auf PUSCH übertragen werden können, keines oder mindestens eines aus Folgendem umfassen: Hybrid Automatic Repeat Request Acknowledgement/Negative Acknowledgement (HARQ-ACK/NACK), einen ersten Teil von Kanalzustandsinformationen (CSI Teil 1) und einen zweiten Teil von Kanalzustandsinformationen (CSI Teil 2); und

der erste Typ von Uplink-Steuerinformationen ist jeglicher der Typen von Uplink-Steuerinformationen, wobei Kategorien von Uplink-Steuerinformationen, die in Sätzen des ersten Typs von Uplink-Steuerinformationen, die auf unterschiedlichen Typen von PUSCHs übertragen werden können, umfasst sind, unterschiedlich sind.

9. Verfahren zum Übertragen von Uplink-Steuerinformationen, umfassend:

Konfigurieren (201), durch ein Netzwerkgerät, von mindestens einem Satz von Physical-Uplink-Shared-Channel (PUSCH) -Konfigurationsparametern für ein Endgerät, wobei der mindestens eine Satz von PUSCH-Konfigurationsparametern einen Satz Skalierungsparameter umfasst, der mindestens einem aus Folgendem entspricht: unterschiedliche Typen von PUSCHs oder unterschiedliche Typen von Uplink-Steuerinformationen, und wobei jeder der Skalierungsparameter konfiguriert ist, um, wenn er vom Endgerät verwendet wird, eine maximale Anzahl von Ressourcenelementen (REs) zu beschränken, die entsprechenden Uplink-Steuerinformationen auf PUSCH zugeordnet sind; und

Senden (202), durch das Netzwerkgerät, des mindestens einen Satzes von PUSCH-Konfigurationsparametern an das Endgerät.

10. Verfahren nach Anspruch 9, wobei das Senden, durch das Netzwerkgerät, des mindestens einen Satzes von PUSCH-Konfigurationsparametern an das Endgerät Folgendes umfasst:
Senden, durch das Netzwerkgerät, des mindestens einen Satzes von PUSCH-Konfigurationsparametern an das Endgerät durch Signalübertragung in einer hohen Schicht.

11. Verfahren nach Anspruch 9 oder 10, wobei der Typ von PUSCH eines des Folgenden umfasst:

Daten, die von PUSCH getragen werden, gehören zu unterschiedlichen Diensttypen oder unterschiedlichen Diensttypgruppen;

Daten, die von PUSCH getragen werden, gehören zu unterschiedlichen Dienstprioritäten oder unterschiedlichen Dienstprioritätsgruppen;

Daten, die von PUSCH getragen werden, gehören zu unterschiedlichen logischen Kanälen oder zu unterschiedlichen Gruppen von logischen Kanälen;

Downlink-Steuerinformationen zum Planen von PUSCH gehören zu unterschiedlichen Formaten von Downlink-Steuerinformationen (downlink control information, DCI) der physikalischen Schicht oder unterschiedlichen DCI-Formatgruppen;

Radio Network Temporary Identifiers (RNTIs) zum Scrambling von Downlink-Steuerinformationen der physikalischen Schicht zum Planen von PUSCH sind unterschiedliche RNTIs oder gehören zu unterschiedlichen RNTI-Gruppen; und

Informationen, die durch Downlink-Steuerinformationen getragen werden, zum Planen von PUSCH sind unterschiedlich.

12. Verfahren nach Anspruch 9 oder 10, wobei der Typ von Uplink-Steuerinformationen mindestens einem Typ von Informationen entspricht, die in Downlink-Steuerinformationen (DCI) getragen werden, zum Planen eines Physical Downlink Shared Channel (PDSCH).

13. Verfahren nach Anspruch 9 oder 10, wobei der mindestens eine Satz von PUSCH-Konfigurationsparametern ferner mindestens eines aus Folgendem umfasst:

einen Satz Zustandsparameter, die mindestens einem aus Folgendem entsprechen: den unterschiedlichen Typen von PUSCHs oder den unterschiedlichen Typen von Uplink-Steuerinformationen, und jeder der Zustandsparameter gibt an, ob zugelassen werden soll, dass ein erster Typ von Uplink-Steuerinformationen auf einem ersten Typ von PUSCH übertragen wird;

einen Satz Beta-Offset-Parameter, die mindestens einem aus Folgendem entsprechen: den unterschiedlichen Typen von PUSCHs oder den unterschiedlichen Typen von Uplink-Steuerinformationen, und jeder der Beta-Offset-Parameter gibt Beta-Offsets eines ersten Typs von Uplink-Steuerinformationen relativ zu Daten an, die von einem ersten Typ von PUSCH getragen werden; oder

mindestens eines aus Folgendem: Kategorien von Uplink-Steuerinformationen, die auf unterschiedlichen Typen von PUSCHs übertragen werden können, oder Nutzdatengrößen von Uplink-Steuerinformationen, die auf den unterschiedlichen Typen von PUSCHs übertragen werden können;

wobei der erste Typ von PUSCH jeglicher der Typen von PUSCHs ist; und der erste Typ von Uplink-Steuerinformationen jeglicher der Typen von Uplink-Steuerinformationen ist.

14. Endgerät, umfassend:

eine Auswahleinheit, die konfiguriert ist, um einen entsprechenden ersten Physical-Uplink-Shared-Channel (PUSCH) -Konfigurationsparameter aus mindestens einem Satz von PUSCH-Konfigurationsparametern auszuwählen, gemäß mindestens einem aus einem Typ von PUSCH oder einem Typ von Uplink-Steuerinformationen, wobei

der mindestens eine Satz von PUSCH-Konfigurationsparametern einen Satz von Skalierungsparametern umfasst, der mindestens einem aus Folgendem entspricht: unterschiedliche Typen PUSCHs oder unterschiedliche Typen Uplink-Steuerinformationen, und wobei jeder der Skalierungsparameter konfiguriert ist, um, wenn er vom Endgerät verwendet wird, eine maximale Anzahl von Ressourcenelementen (REs) zu beschränken, die entsprechenden Uplink-Steuerinformationen auf PUSCH zugeordnet sind; und

eine Übertragungseinheit, die konfiguriert ist, um, basierend auf dem ersten PUSCH-Konfigurationsparameter, Uplink-Steuerinformationen zu übertragen.

15. Netzwerkgerät, umfassend Mittel, die angepasst sind, um das Verfahren nach einem der Ansprüche 9-13 durchzuführen.

**Revendications**

1. Procédé pour transmission d'informations de commande de liaison montante, comprenant :

la sélection (101), par un terminal, à partir d'au moins un ensemble de paramètres de configuration de canal partagé de liaison montante physique, PUSCH, d'un premier paramètre de configuration de PUSCH correspondant, selon au moins un d'un type de PUSCH ou d'un type d'informations de commande de liaison montante, dans lequel l'au moins un ensemble de paramètres de configuration de PUSCH comprend un ensemble de paramètres de mise à échelle correspondant à au moins un de : différents types de PUSCHs, ou, différents types d'informations de commande de liaison montante, et chacun des paramètres de mise à échelle est configuré pour limiter, lorsqu'il est utilisé par le terminal, un nombre maximum d'éléments de ressource, REs, attribués à une information de commande de liaison montante respective sur PUSCH ; et

la transmission (102), par le terminal, des informations de commande de liaison montante, sur la base du premier paramètre de configuration de PUSCH.

**2.** Procédé selon la revendication 1, comprenant en outre :

la réception, par le terminal, de l'au moins un ensemble de paramètres de configuration de PUSCH configurés par un dispositif de réseau ; ou

la configuration, de manière prédéfinie, de l'au moins un ensemble de paramètres de configuration de PUSCH pour le terminal.

**3.** Procédé selon la revendication 2, dans lequel la réception, par le terminal, de l'au moins un ensemble de paramètres de configuration de PUSCH configuré par le dispositif de réseau comprend :

la réception, par le terminal, de l'au moins un ensemble de paramètres de configuration de PUSCH configurés par le dispositif de réseau, par l'intermédiaire de signalisation de couche haute.

**4.** Procédé selon l'une quelconque des revendications 1 à 3, dans lequel le type de PUSCH comprend un de ce qui suit :

des données portées par PUSCH appartiennent à différents types de service ou différents groupes de types de service ;

des données portées par PUSCH appartiennent à différentes priorités de service ou différents groupes de priorités de service ;

des données portées par PUSCH appartiennent à différents canaux logiques ou différents groupes de canaux logiques ;

des informations de commande de liaison descendante pour ordonnancer un PUSCH appartiennent à différents formats d'informations de commande de liaison descendante, DCI, de couche physique ou différents groupes de formats de DCI ;

des identifiants temporaires de réseau radio, RNTIs, pour embrouiller des informations de commande de liaison descendante de couche physique pour ordonnancer un PUSCH sont différents RNTIs ou appartiennent à différents groupes de RNTIs ; et

des informations portées par des informations de commande de liaison descendante pour ordonnancer un PUSCH sont différentes.

**5.** Procédé selon l'une quelconque des revendications 1 à 3, dans lequel le type d'informations de commande de liaison montante correspond à au moins un type d'informations portées dans des informations de commande de liaison descendante, DCI, pour ordonnancer un canal partagé de liaison descendante physique, PDSCH.

**6.** Procédé selon l'une quelconque des revendications 1 à 3, dans lequel des catégories des informations de commande de liaison montante comprennent : un accusé de réception/accusé de réception négatif de demande de répétition automatique hybride, HARQ-ACK/NACK, une première partie d'informations d'état de canal, CSI partie 1, et une seconde partie d'informations d'état de canal, CSI partie 2.

**7.** Procédé selon l'une quelconque des revendications 1 à 3, dans lequel l'au moins un ensemble de paramètres de configuration de PUSCH comprend en outre au moins un de :

un ensemble de paramètres d'état correspondant à au moins un de : les différents types de PUSCHs, ou, les différents types d'informations de commande de liaison montante, et chacun des paramètres d'état indique s'il faut permettre à un premier type d'informations de commande de liaison montante d'être transmis sur un premier type de PUSCH ;

un ensemble de paramètres de décalages bêta correspondant à au moins un de : les différents types de PUSCHs, ou, les différents types d'informations de commande de liaison montante, et chacun des paramètres de décalages bêta indique des décalages bêta d'un premier type d'informations de commande de liaison montante relativement à des données portées par un premier type de PUSCH ; ou,

au moins un de : catégories d'informations de commande de liaison montante capables d'être transmises sur les différents types de PUSCHs, ou, tailles de charge utile d'informations de commande de liaison montante capables d'être transmises sur les différents types de PUSCHs ;

dans lequel le premier type de PUSCH est l'un quelconque des types de PUSCHs ; et le premier type d'informations de commande de liaison montante est l'un quelconque des types d'informations de commande de liaison montante.

8. Procédé selon la revendication 7, dans lequel des catégories d'un premier type d'informations de commande de liaison montante capables d'être transmises sur PUSCH ne comprennent aucun de, ou comprennent au moins un de : un accusé de réception/accusé de réception négatif de demande de répétition automatique hybride, HARQ-ACK/NACK, une première partie d'informations d'état de canal, CSI partie 1, ou, une seconde partie d'informations d'état de canal, CSI partie 2 ; et

le premier type d'informations de commande de liaison montante est l'un quelconque des types d'informations de commande de liaison montante,

dans lequel des catégories d'informations de commande de liaison montante comprises dans des ensembles du premier type d'informations de commande de liaison montante capables d'être transmises sur les différents types de PUSCHs sont différentes.

9. Procédé pour transmission d'informations de commande de liaison montante, comprenant :

la configuration (201), par un dispositif de réseau, d'au moins un ensemble de paramètres de configuration de canal partagé de liaison montante physique, PUSCH, pour un terminal, dans lequel l'au moins un ensemble de paramètres de configuration de PUSCH comprend un ensemble de paramètres de mise à échelle correspondant à au moins un de : différents types de PUSCHs, ou, différents types d'informations de commande de liaison montante, et chacun des paramètres de mise à échelle est configuré pour limiter, lorsqu'il est utilisé par le terminal, un nombre maximum d'éléments de ressource, REs, attribués à une information de commande de liaison montante respective sur PUSCH ; et

l'envoi (202), par le dispositif de réseau, de l'au moins un ensemble de paramètres de configuration de PUSCH au terminal.

10. Procédé selon la revendication 9, dans lequel l'envoi, par le dispositif de réseau, de l'au moins un ensemble de paramètres de configuration de PUSCH, au terminal, comprend :

l'envoi, par le dispositif de réseau, de l'au moins un ensemble de paramètres de configuration de PUSCH, au terminal, par l'intermédiaire de signalisation de couche haute.

11. Procédé selon la revendication 9 ou 10, dans lequel le type de PUSCH comprend un de ce qui suit :

des données portées par PUSCH appartiennent à différents types de service ou différents groupes de types de service ;

des données portées par PUSCH appartiennent à différentes priorités de service ou différents groupes de priorités de service ;

des données portées par PUSCH appartiennent à différents canaux logiques ou différents groupes de canaux logiques ;

des informations de commande de liaison descendante pour ordonnancer un PUSCH appartiennent à différents formats d'informations de commande de liaison descendante, DCI, de couche physique ou différents groupes de formats de DCI ;

des identifiants temporaires de réseau radio, RNTIs, pour embrouiller des informations de commande de liaison descendante de couche physique pour ordonnancer un PUSCH sont différents RNTIs ou appartiennent à différents groupes de RNTIs ; et

des informations portées par des informations de commande de liaison descendante pour ordonnancer un PUSCH sont différentes.

12. Procédé selon la revendication 9 ou 10, dans lequel le type d'informations de commande de liaison montante correspond à au moins un type d'informations portées dans des informations de commande de liaison descendante, DCI, pour ordonnancer un canal partagé de liaison descendante physique, PDSCH.

**13.** Procédé selon la revendication 9 ou 10, dans lequel l'au moins un ensemble de paramètres de configuration de PUSCH comprend en outre au moins un de :

un ensemble de paramètres d'état correspondant à au moins un de : les différents types de PUSCHs, ou, les différents types d'informations de commande de liaison montante, et chacun des paramètres d'état indique s'il faut permettre à un premier type d'informations de commande de liaison montante d'être transmis sur un premier type de PUSCH ;

un ensemble de paramètres de décalages bêta correspondant à au moins un de : les différents types de PUSCHs, ou, les différents types d'informations de commande de liaison montante, et chacun des paramètres de décalages bêta indique des décalages bêta d'un premier type d'informations de commande de liaison montante relativement à des données portées par un premier type de PUSCH ; ou,

au moins un de : catégories d'informations de commande de liaison montante capables d'être transmises sur les différents types de PUSCHs, ou, tailles de charge utile d'informations de commande de liaison montante capables d'être transmises sur les différents types de PUSCHs ;

dans lequel le premier type de PUSCH est l'un quelconque des types de PUSCHs ; et le premier type d'informations de commande de liaison montante est l'un quelconque des types d'informations de commande de liaison montante.

**14.** Terminal, comprenant :

une unité de sélection, configurée pour sélectionner un premier paramètre de configuration de canal partagé de liaison montante physique, PUSCH, correspondant à partir d'au moins un ensemble de paramètres de configuration de PUSCH, selon au moins un d'un type de PUSCH ou d'un type d'informations de commande de liaison montante, dans lequel l'au moins un ensemble de paramètres de configuration de PUSCH comprend un ensemble de paramètres de mise à échelle correspondant à au moins un de : différents types de PUSCHs, ou, différents types d'informations de commande de liaison montante, et chacun des paramètres de mise à échelle est configuré pour limiter, lorsqu'il est utilisé par le terminal, un nombre maximum d'éléments de ressource, REs, attribués à une information de commande de liaison montante respective sur PUSCH ; et

une unité de transmission, configurée pour transmettre, sur la base du premier paramètre de configuration de PUSCH, des informations de commande de liaison montante.

**15.** Dispositif de réseau, comprenant des moyens adaptés pour réaliser le procédé selon l'une quelconque des revendications 9 à 13.

A terminal selects a corresponding first PUSCH configuration parameter according to at least one of a type of PUSCH or a type of uplink control information    101

The terminal transmits the uplink control information based on the first PUSCH configuration parameter    102

**FIG. 1**

A network device configures at least one set of PUSCH configuration parameters for a terminal; here, different PUSCH configuration parameters correspond to at least one of: different types of PUSCHs, or, different types of uplink control information    201

The network device sends the at least one set of PUSCH configuration parameters to the terminal    202

**FIG. 2**

Selection unit
31

Transmission unit
32

**FIG. 3**

```
┌─────────────────────────┐
│   First configuration   │
│          unit           │
│           33            │
└─────────────────────────┘
             │
┌─────────────────────────┐
│     Selection unit      │
│           31            │
└─────────────────────────┘
             │
┌─────────────────────────┐
│   Transmission unit     │
│           32            │
└─────────────────────────┘
```

**FIG. 4**

```
┌─────────────────────────┐
│  Second configuration   │
│          unit           │
│           41            │
└─────────────────────────┘
             │
┌─────────────────────────┐
│     Sending unit        │
│           42            │
└─────────────────────────┘
```

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HUAWEI et al.** Discussion on UCI feedback for URLLC. *R1-1800054,* 13 January 2018
- **NOKIA et al.** On UCI multiplexing. *R1-1720013,* 17 November 2017
- **GATT.** Considerations on UCI multiplexing for NR URLLC. *R1-1806297,* 12 May 2018